Europäisches Patentamt

European Patent Office

Office européen des brevets

(19)

(11) Veröffentlichungsnummer: **0 235 333**
**B1**

(12) **EUROPÄISCHE PATENTSCHRIFT**

(45) Veröffentlichungstag der Patentschrift:
**03.05.89**

(21) Anmeldenummer: **86102839.7**

(22) Anmeldetag: **04.03.86**

(51) Int. Cl.⁴: **G01M 17/00**

(54) **Bezugsplattform für eine arretierbare Aufstellung.**

(43) Veröffentlichungstag der Anmeldung:
**09.09.87 Patentblatt 87/37**

(45) Bekanntmachung des Hinweises auf die Patenterteilung:
**03.05.89 Patentblatt 89/18**

(84) Benannte Vertragsstaaten:
**AT DE GB IT**

(56) Entgegenhaltungen:
**DE-A- 3 303 588**

(73) Patentinhaber: **CARL SCHENCK AG,
Landwehrstrasse 55 Postfach 40 18,
D-6100 Darmstadt(DE)**

(72) Erfinder: **Storck, Karlheinz, Dr., Waldstrasse 84,
D-6109 Mühltal 2(DE)**

(74) Vertreter: **Dallhammer, Herbert, Dipl.-Ing., CARL
SCHENCK AG Patentabteilung
Postfach 4018 Landwehrstrasse 55,
D-6100 Darmstadt(DE)**

**Beschreibung**

Die Erfindung betrifft eine Bezugsplattform für eine arretierbare Aufstellung und Ausrichtung von Bedien-, Kontroll- und/oder Meßgeräten im Fahrgastraum eines Kraftfahrzeugs.

Zur Funktionskontrolle von Kraftfahrzeugen, insbesondere auch für die Kontrolle von Abgaswerten, werden die Kraftfahrzeuge auf Rollenprüfständen untersucht. Außer der Kontrolle von Abgaswerten, die bei verschiedenen, auf dem Rollenprüfstand zu fahrenden Geschwinkigkeiten gemessen werden, gehört es zu derartigen Funktionskontrollen u.a. die Beschleunigung und Schaltbarkeit eines Kraftfahrzeugs zu kontrollieren. Um einen reproduzierbaren Vergleich zwischen den verschiedenen Kraftfahrzeugen einer Serie und einen Vergleich der Serien untereinander zu erhalten, werden anstelle von Testpersonen in zunehmendem Maße Automaten eingesetzt, die die Funktion des Kuppelns, des Einlegens der Gänge, des Beschleunigens, des Bremsens und des Fahrens mit vorgegebener Geschwindigkeit übernehmen.

Diese Automaten müssen in den Fahrgastraum gebracht werden, und um ihre Funktion erfüllen zu können in möglichst gleicher Lage im Fahrgastraum abgestellt werden. Dies geschah bisher einmal dadurch, daß der Fahrersitz aus dem Fahrgastraum entfernt wurde und anstelle dieses der Automat mit den Verankerungen für den Fahrersitz verbunden wurde. Eine derartige Aufstellung im Fahrgastraum gewährleistet eine sichere und stabile Aufstellung des Automaten; sie ist jedoch sehr zeitaufwendig, da zusätzlich der Fahrersitz in einem Arbeitsgang ausgebaut und in einem weiteren Arbeitsgang wieder eingebaut werden muß. Trotz stabiler Halterung stellt eine derartige Aufstellung einen zusätzlichen Zeitaufwand dar, der im Rahmen der Steigerung des Durchsatzes von zu prüfenden Kraftfahrzeugen als gegeben hingenommen werden muß.

Eine andere Aufstellungsweise derartiger Automaten im Fahrgastraum besteht darin, daß diese auf dem Fahrersitz mit Abstützung an der Rückenlehne und seitlicher Orientierung an den Außenkanten des Sitzpolsters mit Halteblechen in den Fahrgastraum eingebracht werden. Hierbei fällt zwar der Zeitaufwand für den Aus- und Wiedereinbau des Fahrersitzes weg, jedoch ist hierbei die Gefahr der Verschmutzung des Fahrersitzes durch den Automaten nicht auszuschließen. Ein wesentlich größerer Nachteil besteht noch darin, daß eine stabile Verankerung des Fahrautomaten an den Polstern des Fahrersitzes nicht möglich ist (vgl. hierzu DE-AI 3 303 588).

Ausgehend hiervon liegt der Erfindung die Aufgabe zugrunde, ohne Ausbau des Fahrersitzes Bedien-, Kontroll- und/oder Meßgeräte in reproduzierbarer Lage im Fahrgastraum eines Kraftfahrzeuges abzustellen und zu arretieren. Diese Aufgabe wird mit den Merkmalen des Anspruchs 1 gelöst. Durch die Anordnung und Verspannung einer Grundplatte mit Führungen am Lenkrad ist ein für alle Messungen reproduzierbarer Orientierungspunkt geschaffen, der die Gewähr dafür bietet, daß unabhängig von der Aufstellung des Bedien-, Kontroll-und/oder des Meßgeräts die mechanischen Betätigungselemente zwischen Bediengerät, Meßgerät oder Kontrollgerät und Armatur, beispielsweise Bremse, Kupplung oder Gaspedal an derselben Stelle der Armatur angreifen. Damit wird ein zusätzliches Nachjustieren bei den Fahrzeugen der einzelnen Serie überflüssig, da die Halterung für das Bedien-, Meß- und/oder Kontrollgerät und der Orientierungspunkt an derselben Stelle im Kraftfahrzeug angeordnet sind, und zwar im Bereich des unteren Lenkradscheitels.

In Anspruch 2 wird die Anpassung des Orientierungspunktes und der Halterung an unrunde Lenkräder unter Schutz gestellt. Damit muß auch bei Verwendung derartiger Lenkräder kein zusätzlicher Aufwand für den Austausch der Lenkräder durch Hilfslenkräder für die Kontrolle oder die Messung betrieben werden.

Anspruch 3 stellt eine besonders vorteilhafte Ausgestaltung der Grundplatte dar, wenn diese aus einem mit dem Radkranz zusammenwirkenden Stützstab und gegen den Radkranz sich abstützende verspannbare Stützplatten besteht. Auch werden durch die auf den Stützplatten angeordneten Führungen für die Abstützung der Anschlußplatte die auf die Lenkräder des Kraftfahrzeugs über das Lenkrad eingeleiteten Lenkbewegungen, wie sie auf Rollenprüfständen durchzuführen sind oder wie sie beim Transport der Kraftfahrzeuge von Prüfstand zu Prüfstand erforderlich werden, nicht beeinträchtigt. Es können demgemäß mit der Erfindung auch Kontrolluntersuchungen bei einem gewissen Schräglauf des Fahrzeugs durchgeführt werden.

Anspruch 4 stellt die Aufteilung der Stützplatten in links und rechts des unteren Scheitels des Radkranzes angeordnete, segmentartige Stützplatten unter Schutz.

Anspruch 5 begehrt Schutz für eine einstückige Stützplatte, bei der lediglich eine Aussparung für den Stützstab vorgesehen ist.

Der Anspruch 6 stellt eine U-förmige Führungsnut für die Anschlußplatte unter Schutz, die eine Führung der Anschlußplatte sowohl in axialer, als auch in radialer Richtung ermöglicht.

Anspruch 7 stellt Führung der Anschlußplatte als Torusführung unter Schutz, bei der diese die Führung umgreift und ebenfalls in radialer und axialer Richtung geführt ist.

Im Anspruch 8 wird eine weitere Ausgestaltung der Anschlußplatte offenbart, die mittels balliger Rollen innerhalb der U-förmigen Führungsnut der Bezugsplattform geführt wird.

Die in Anspruch 9 unter Schutz gestellte Anschlußplatte trägt als Führungsmittel Rollen mit Laufrillen oder Rollen in V-förmiger Anordnung um bei der Torusführung eine eindeutige axiale und radiale Führung zu erreichen.

In Anspruch 10 wird eine besonders vorteilhafte Ausgestaltung des Halterarmes mit Halterungen für die Bedien-, Meß- und/oder Kontrollgeräte unter Schutz gestellt, wobei zufolge der Schwenk- und Drehbeweglichkeit des Haltearms gemäß Anspruch 1 in der in der Anschlußplatte vorgesehenen Halterung auch eine räumliche, reproduzierbare Einstellung des Meß- und/oder Kontrollgeräts im Kraftfahrzeug bewirkt wird.

In der nachfolgenden Zeichnung wird die Erfindung näher erläutert.

Es zeigen:

Fig. 1 ein in einem Fahrgastraum eines Kraftfahrzeugs eingebrachtes Bedien-, Kontroll- oder Meßgerät mit erfindungsgemäßer Bezugsplattform

Fig. 2 eine erfindungsgemäße Bezugsplattform mit Anschlußplatte und Haltearm

Fig. 2a eine erfindungsgemäße Führung der Anschlußplatte an der Bezugsplattform

Fig. 2b eine andere erfindungsgemäße Führung der Anschlußplatte an der Bezugsplattform und

Fig. 3 einen in der Anschlußplattform angeordneten erfindungsgemäßen Haltearm mit Halterungen für ein Bedien-, Meß- oder Kontrollgerät.

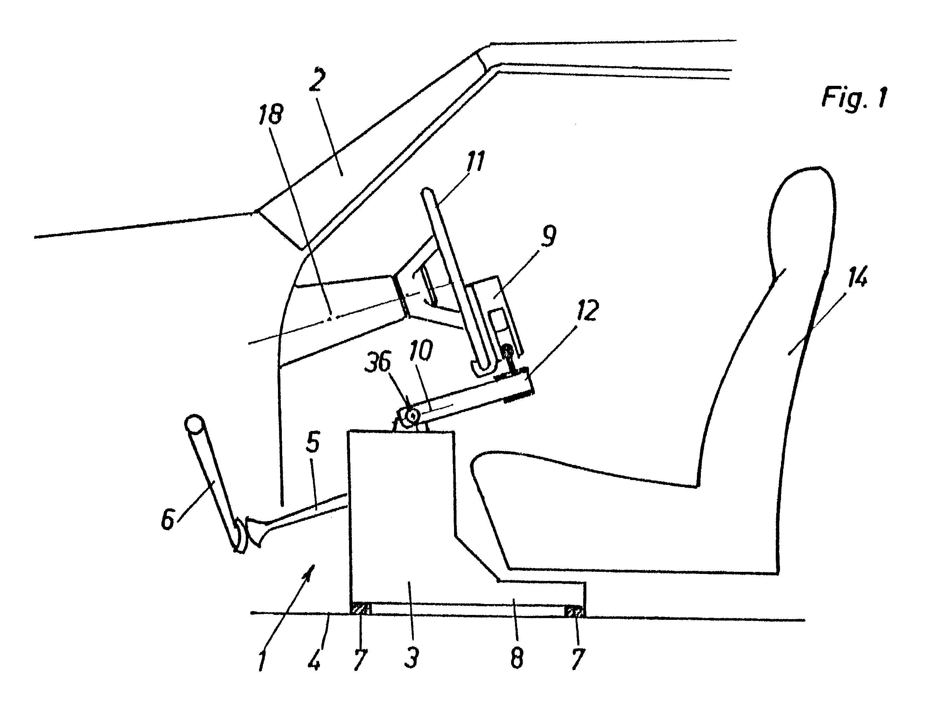

Gemäß Fig. 1 ist im Fußraum 1 eines Kraftfahrzeugs 2 ein Bedien-, Kontroll- oder Meßgerät 3 am Boden 4 des Fußraumes 1 abgestellt. Vom Gerät 3 ausgehend ist eine mechanische Betätigungseinrichtung 5 in Wirkverbindung mit einem Pedal 6 bringbar. Bei dem Pedal kann es sich um das Brems-, Kupplungs, und/oder Gaspedal handeln. Auch ist es möglich, daß für jedes Pedal 6 eine eigene mechanische Betätigungseinrichtung 5 vorgesehen ist.

Das Gerät 3 besitzt eine größtmögliche Grundplatte 8, die ohne Beschädigung der Türöffnungen des Kraftfahrzeugs in den Fußraum 1 des Kraftfahrzeugs eingebracht werden kann. Sie stützt sich über Füße 7 einerseits stabil auf dem Boden 4 ab und ist zum anderen über eine Bezugsplattform 9 und einen Haltearm 10 gegen ein Lenkrad 11 des Kraftfahrzeugs 2 abgestützt.

Wie in Fig. 1 weiter dargestellt, ist der Haltearm 10 drehbeweglich am Gerät 3 angeordnet und zum anderen mit einer Anschlußplatte 12 verbunden, die in der Bezugsplattform 9 geführt wird.

Die Fig. 1 zeigt schematisch die einfachste Ausgestaltungsmöglichkeit der Erfindung, die es ermöglicht, bei eingebautem Fahrersitz 14 eine reproduzierbare Stellung von Geräten, und deren Wirkverbindung zu den Pedalen herzustellen, und zwar zufolge der am Lenkrad angeordneten erfindungsgemäßen Bezugsplattform. Darüber hinaus zeigt die Fig. 1, daß nicht nur ein Gerät mit Hilfe der erfindungsgemäßen Bezugsplattform 9 im Fahrgastraum eines Kraftfahrzeugs 2 unterzubringen ist, sondern daß unter Ausnutzung des noch verbleibenden Fahrgastraumes weitere Einrichtungen koordiniert zueinander ohne Hilfsabstützungen am Fahrersitz einbaubar sind.

Zufolge der erfindungsgemäßen Schwenkbarkeit und Drehbarkeit des Haltearms 10 ist für das Gerät 3 ein ebener Boden 4 nicht erforderlich. Es kann zufolge des mit der Bezugsplattform 9 geschaffenen festen Orientierungspunktes im Kraftfahrzeug stets eine reproduzierbare Lage des Geräts 3 oder weiterer Einrichtungen erreicht werden.

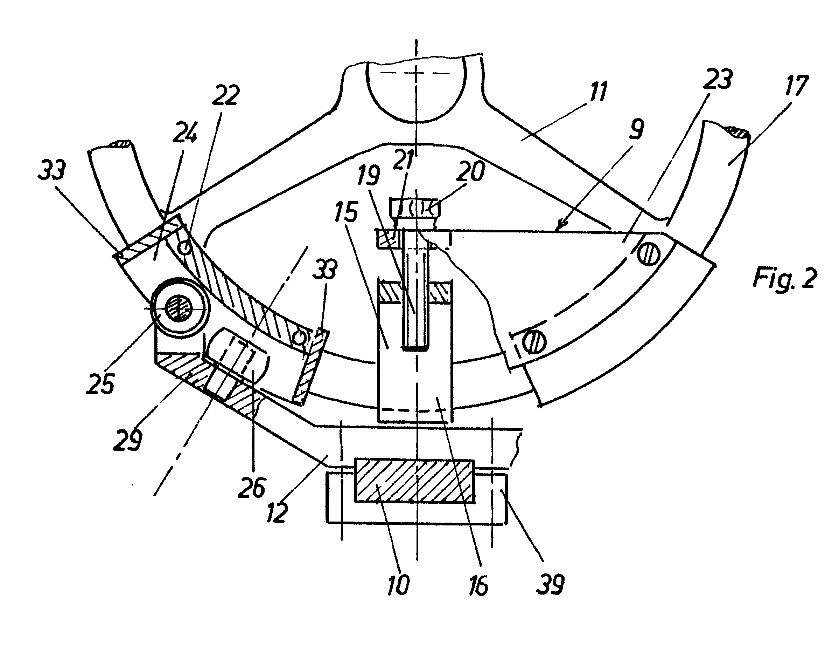

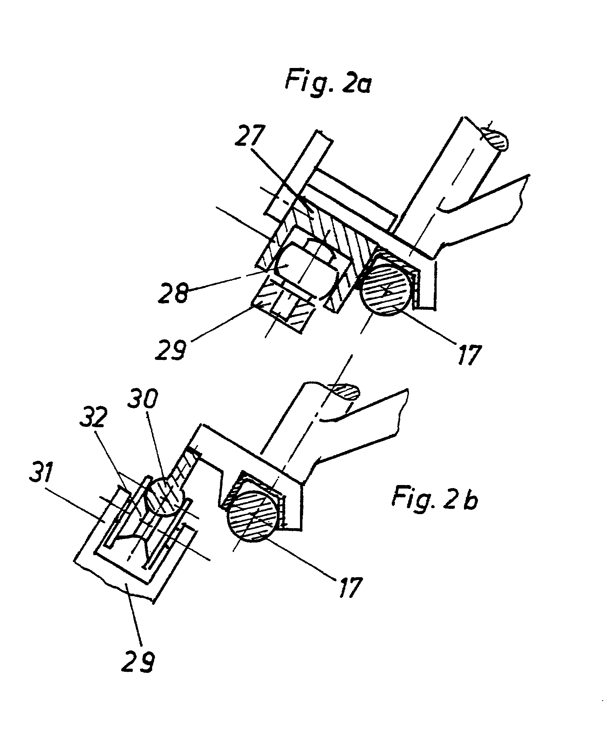

Die in Fig. 2 dargestellte erfindungsgemäße Bezugsplattform 9 besteht aus einem Stützstab 15, der den unteren Scheitel 16 des Lenkradkranzes 17 umfaßt. Der Stützstab 15 trägt an seinem der Lenksäule 18 (vgl. Fig. 1) zugewandten Ende eine in einer Gewindebohrung 19 geführte Schraube 20. Die Schraube 20 besitzt eine Schulter 21 an der sich Stützplatten 22, 23 abstützen. Durch Drehen der Schraube 20 werden die Stützplatten 22, 23 gegen den Lenkradkranz 17 verspannt; im Ausführungsbeispiel gemäß Fig. 2a und 2b gegen die radial innere Seite des Lenkradkranzes 17. Die Stützplatten 22, 23 besitzen, wie in den Fig. 2a und 2b näher ausgeführt, Führungen 24 für Führungsrollen 25, 26 der Anschlußplatte 12.

Zufolge der beweglichen Führung der Anschlußplatte 12 an den Stützplatten 22, 23 ist die Lenkbarkeit des Kraftfahrzeugs im interessierenden Bereich auf einem Rollenprüfstand nicht eingeschränkt. Zufolge des schwenk- und drehbaren Haltearms 10 läßt sich ohne weiteres ein vorgebbarer Anlagedruck in radialer und axialer Richtung der Anschlußplatte 12 gegen die Bezugsplattform 9 erreichen. Der Haltearm 10 ist in einer Halterung 39, die in der Anschlußplatte 12 vorgesehen ist, gehaltert; dabei kann die Halterung 39 mittels Schnellverschluß arretiert werden.

Fig. 2a zeigt eine erfindungsgemäße Nutenführung 27 an den Stützplatten 22, 23. In der Nutenführung 27 wird eine ballige Führungsrolle 28 geführt, die auf einem, sich in Umfangsrichtung erstreckenden Führungsarm 29 angeordnet ist (vgl. auch Fig. 2). Der Übersichtlichkeit halber wurde der sich in Richtung der Stützplatte 23 erstreckende Führungsarm 29 weggelassen.

In Fig. 2b ist die an den Stützplatten 22, 23 angeordnete Führung als Torusführung 30 ausgebildet. In diesem Falle wird der Führungsarm 29 an seinem Ende gabelförmig erweitert, so daß in einer Gabel 31 eine Rolle mit Laufrille 32 angeordnet werden kann, die die Torusführung 30 umfaßt und somit ebenfalls eine Führung der Anschlußplatte 12 in axialer und radialer Richtung bewirken kann. Anstelle der Rolle mit Laufrille 32 können in der Gabel 31 auch Laufrollen mit glatter Oberfläche angeordnet sein, deren Achsen sich unter einem Winkel von beispielsweise 90° kreuzen und die an der Torusführung entlangrollen.

Es ist nicht erforderlich, die Nutenführung oder die Torusführung über den unteren Halbkreis des Lenkrades hinaus zu verlängern, da durch die Lenkbewegungen, des Lenkrads auf den Rollenprüfständen ein Punkt am Lenkradumfang lediglich etwa 50 bis 150 mm aus seiner Ruhelage auswandert. Nur in diesen Segmenten ist auch eine Führung in Nuten- oder Torusform erforderlich. Am Ende der Führungsstrecke kann jeweils durch eine Arretierung 33 ein Weiterbewegen des Lenkrads verhindert werden. Aus den Fig. 2a und 2b geht heror, daß die Führungen 27 und 30 in axialer Richtung zum Lenkradkranz verschoben sind. Weiterhin ist aus den Fig. 2, 2a und 2b ohne weiteres zu entnehmen, daß auch Lenkräder, die unrund oder exzentrisch zur Lenksäule sind, die Bezugsplattform tragen können, da die Führungen 24 für die Anschlußplatte 12 konzentrisch zur Lenksäule angeordnet sind.

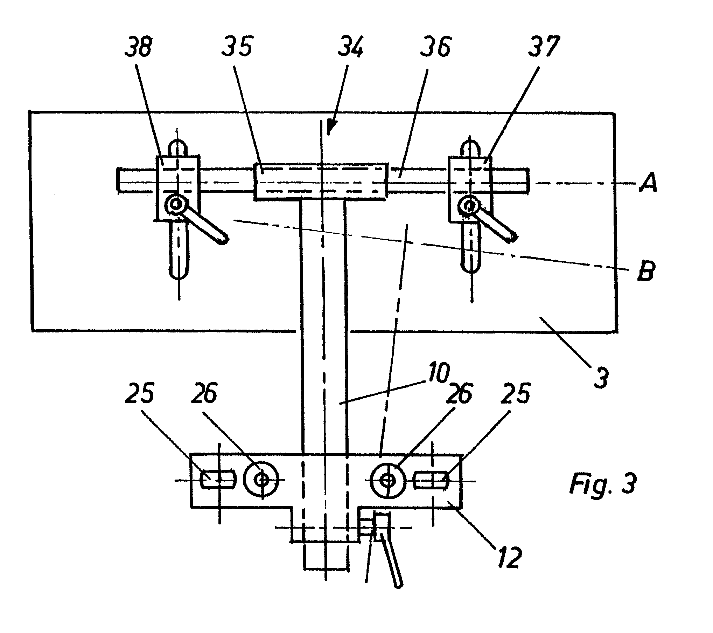

Fig. 3 zeigt den Haltearm 10, der einerseits in der Anschlußplatte 12 befestigbar ist und der zufolge der Führungsrollen 25, 26 in der Bezugsplattform 9 geführt und zu dieser ausgerichtet wird. Das gegenüberliegende Ende 34 des Haltearms 10 trägt eine Führung 35 für eine Quertraverse 36. Auf der Quertraverse 36 sind im Ausführungsbeispiel gemäß Fig. 3 zwei verschiebbare Halterungen 37, 38 dargestellt, die mit dem Gerät 3 verbindbar sind. Wie in Fig. 1 dargestellt, kann die Quertraverse 36 als Stab ausgeführt sein, so daß durch Verschieben des Haltearms 10 in Richtung auf die Anschlußplatte zum einen eine Verschwenkung des Geräts 3 ermöglicht wird und zum anderen der Anpressdruck zwischen Anschlußplatte 12 und Bezugsplattform 9 eingestellt wird.

## Patentansprüche

1. Bezugsplattform für eine arretierbare Aufstellung und Ausrichtung von Bedien-, Kontroll-, und/oder Meßgeräten im Fahrgastraum eines Kraftfahrzeugs, dadurch gekennzeichnet, daß im Bereich des unteren Scheitels (16) eines zur Lenkradachse des Kraftfahrzeugs praktisch zentrischen Lenkrads (11), eine zum Lenkrad (11) ausrichtbare und mit dem Lenkrad (11) verspannbare Grundplatte (9) mit Führungen (24) vorgesehen ist, daß eine Anschlußplatte (12) in den Führungen (24) der Grundplatte (9) links und rechts der Lenkradmitte oberhalb des unteren Lenkradscheitels (16) geführt wird, daß die Anschlußplatte (12) unterhalb des unteren Lenkradscheitels (16) eine Halterung für einen verschiebbaren und verschwenkbaren Haltearm (10) für die Bedien-, Kontroll- oder Meßgeräte (3) trägt.

2. Bezugsplattform nach Anspruch 1, dadurch gekennzeichnet, daß für unrunde oder exzentrische Lenkräder die mit dem Lenkrad (11) verbindbare Grundplatte (9) entsprechen der Lage des unteren Scheitels (16) eines idealen, zur Lenkradachse zentrischen Rades mit dem eingebauten Lenkrad verspannt wird.

3. Bezugsplattform nach Anspruch 1 oder Anspruch 2, dadurch gekennzeichnet, daß ein Stützstab (15) an seinem einen Ende eine den unteren Scheitel (16) des Lenkradkranzes (17) auf der radial inneren und/oder radial äußeren Seite fassende Auskragung trägt, daß an seinem anderen, der Lenksäule (18) zugewandten Ende eine in einer Gewindebohrung (19) geführte Schraube (20) vorgesehen ist, daß der Schraubenschaft eine umlaufende Schulter (21) besitzt, an der sich Stützplatten (22, 23) abstützen, die beim Drehen der Schraube (20) gegen die radial innere oder radial äußere Seite des Lenkradkranzes (17) verspannt werden und daß die Stützplatten (22, 23) in axialer Richtung der Lenksäule neben dem Lenkradkranz (17) in Kreissegmenten verlaufende Führungen (24) tragen, die eine Abstützung der Anschlußplatte (12) in radialer und axialer Richtung bewirken.

4. Bezugsplattform nach Anspruch 3, dadurch gekennzeichnet, daß je eine segmentartige Stützplatte (22, 23) links und rechts des unteren Scheitels (16) des Lenkradkranzes (17) vorgesehen ist.

5. Bezugsplattform nach Anspruch 3, dadurch gekennzeichnet, daß eine Stützplatte im Bereich des unteren Scheitels (16) des Radkranzes (17) vorgesehen ist, die eine Aussparung für den Stützstab (15) trägt.

6. Bezugsplattform nach Anspruch 4 oder 5, dadurch gekennzeichnet, daß jede Stützplatte (22 bzw. 23) als Kreissegment ausgebildet, eine U-förmige Führungsnut (27) besitzt.

7. Bezugsplattform nach Anspruch 4 oder 5, dadurch gekennzeichnet, daß jede Stützplatte (22 bzw. 23) als Kreissegment ausgebildet, eine Torusführung (30) trägt.

8. Bezugsplattform nach Anspruch 1, 2, 3, 4, 5 und 6, dadurch gekennzeichnet, daß die Anschlußplatte (12) ausgehend von der Halterung für den Haltearm (10) links und rechts in Umfangsrichtung des Lenkradkranzes (17) sich erstreckend je einen Führungsarm (29) besitzt, auf dem eine ballige Führungsrolle (28) angeordnet ist, die in der U-förmigen Führungsnut (27) der Bezugsplattform (9) geführt wird.

9. Bezugsplattform nach Anspruch 1, 2, 3, 4, 5 und 7, dadurch gekennzeichnet, daß die Anschlußplatte (12) ausgehend von der Halterung (39) für den Haltearm (10) links und rechts in Umfangsrichtung des Rades sich erstreckend je einen Führungsarm (29) besitzt, auf dem eine Rolle mit Laufrille (32) oder Rollen in V-Anordnung angeordnet ist/sind, die mit der Torusführung (30) in Eingriff sind.

10. Bezugsplattform nach einem der vorhergehenden Ansprüche, dadurch gekennzeichnet, daß der Haltearm (10) an seinem der Halterung (39) gegenüberliegenden Ende (34) eine Führung (35) für eine Quertraverse (36) trägt und daß die Quertraverse (36) verschiebbare Halterungen (37, 38) für das im Fahrgastraum des Kraftfahrzeugs abzustellende bzw. zu orientierende Bedien-, Kontroll- oder Meßgerät (3) besitzt.

## Claims

1. Reference platform for a lockable installation and alignment of operating, monitoring and/or measuring apparatus in the passenger compartment of a motor vehicle, characterised in that a base plate (9) which can be aligned with the steering wheel (11) and braced against the steering wheel (11) in the region of the lower apex (16) of a steering wheel (11) practically centric to the steering wheel axis of the vehicle is provided with guides (24), that a connection plate (12) is guided in the guides (24) of the base plate (9) on the right and left of the centre of the steering wheel above the lower steering wheel apex (16), and that the connection plate (12) has a holding device beneath the lower steering wheel apex (16) for a displaceable and pivotable holding arm (10) for the operating, monitoring or measuring apparatus (3).

2. Reference platform according to Claim 1, characterised in that for non-round or eccentric steering wheels, the base plate (9) which can be connected with the steering wheel (11) is braced against the fitted steering wheel according to the position of the lower apex (16) of an ideal wheel centric to the steering wheel axis.

3. Reference platform according to Claim 1 or Claim 2, characterised in that a supporting bar (15) holds at one of its ends a projection gripping the lower apex (16) of the steering wheel rim (17) on the radially inner and/or radially outer side, that on its other end facing the steering column (18) a screw (20) is provided which is held in a threaded bore (19), that the screw shank has a surrounding shoulder (21) on which supporting plates (22, 23) are supported, which upon turning the screw (20) are braced against the radially inner or radially outer side of the steering wheel rim (17), and that the supporting plates (22, 23) have guides (24) running in segments of a circle in the axial direction of the steering column close to the steering wheel rim (17) which effect the support of the connection plate (12) in the radial and axial direction.

4. Reference platform according to Claim 3, characterised in that in each case a segment-like supporting plate (22, 23) is provided on the left and to the right of the lower apex (16) of the steering wheel rim (17).

5. Reference platform according to Claim 3, characterised in that a suppporting plate is provided in the region of the lower apex (16) of the wheel rim (17) which has a recess for the supporting bar (15).

6. Reference platform according to Claim 4 or 5, characterised in that each supporting plate (22 or 23), formed as a segment of a circle, has a U-shaped guide groove (27).

7. Reference platform according to claim 4 or 5, characterised in that each supporting plate (22 or 23), formed as a segment of a circle, has a torus guide (30).

8. Reference platform according to Claims 1, 2, 3, 4, 5 and 6, characterised in that the connection plate (12) starting from the holding device for the holding arm (10) has one guide arm (29) in each case extending on the left and the right in the circumferential direction of the steering wheel rim (17), on which arm a cambered guide roller (28) is arranged, which is held in the U-shaped guide groove (27) of the reference platform (9).

9. Reference platform according to Claims 1, 2, 3, 4, 5 and 7, characterised in that the connection plate (12) starting from the holding device (39) for the holding arm (10) has one guide arm (29) in each case extending on the left and the right in the circumferential direction of the wheel, on which arm a roller with a running track (32) or rollers in a V-arrangement is/are arranged, which are engaged in the torus guide (30).

10. Reference platform according to one of the preceding Claims, characterised in that the holding arm (10) at its end (34) opposite the holding device (39) holds a guide (35) for a crossbar (36), and that said crossbar (36) has displaceable holding devices (37, 38) for the operating, monitoring or measuring apparatus (3) to be placed or orientated in the passenger compartment of the vehicle.

## Revendications

1. Plate-forme de référence pour un relevé et un alignement d'appareils de service, de contrôle et/ou de mesure, dans un compartiment des passagers d'un véhicule automobile, caractérisé en ce qu'une plaque de base (9), ajustable par rapport au volant (11) et pouvant être serrée sur le volant, avec des guidages (24), est prévue dans la zone du sommet (16) inférieur d'un volant (11) qui est pratiquement central, par rapport à l'axe de direction du véhicule automobile, en ce qu'une plaque de raccordement (12) est guidée dans les guidages (24) de la plaque de base (9), à gauche et à droite du milieu du volant, au-dessus du sommet de volant (16) inférieur, en ce que la plaque de raccordement (12) porte au dessous du sommet de volant (16) inférieur, une fixation pour un bras de support (10) mobile et basculant, pour les appareils de service, de contrôle ou de mesure (3).

2. Plate-forme de référence selon la revendication 1, caractérisée en ce que la plaque de base (9), qui peut être reliée au volant (11), est serrée avec le volant qui est monté, en fonction de la position du sommet (16) inférieur d'une roue idéale, centrée par rapport à l'axe de volant, dans le cas de volants ovales ou excentriques.

3. Plate-forme de référence selon l'une quelconque des revendications 1 et 2, caractérisée en ce qu'une barre d'appui (15) porte sur l'une de ses extrémités une saillie encadrant le sommet (16) inférieur de la couronne de volant (17), sur le côté radial intérieur et/ou radial extérieur, en ce qu'une vis (20) guidée dans un alésage fileté (19) est prévue à son autre extrémité, qui est tournée vers la colonne de direction (18), en ce que la tige de vis possède un épaulement (21) circulaire, sur lequel s'appuient des plaques de soutien (22, 23), qui sont serrées contre le côté inférieur radial ou bien extérieur radial du volant (17), lors de la rotation de la vis (20), et que les plaques de soutien (22, 23) portent des guidages se développant en segments de cercle, dans la direction axiale de la colonne de direction, à côté de la couronne de volant (17), qui provoquent un appui de la plaque de raccordement (12) en direction radiale et axiale.

4. Plate-forme de référence selon la revendication 3, caractérisée en ce qu'une plaque de soutien (22, 23) en genre de segment est prévue à gauche et à droite du sommet (16) inférieur de la couronne de volant (17).

5. Plate-forme de référence selon la revendication 3, caractérisée en ce qu'une plaque de soutien est prévue dans la zone du sommet (16) inférieur de la couronne du volant (17), qui porte un évidement pour la barre d'appui (15)

6. Plate-forme de référence selon l'une quelconque des revendications 4 et 5, caractérisée en ce que chaque plaque de soutien (22, respectivement 23), réalisée sous forme de segment de cercle, possède une rainure de guidage (27), en forme de U.

7. Plate-forme de référence selon l'une quelconque des revendications 4 et 5, caractérisée en ce que chaque plaque de soutien (22, respectivement 23), réalisée sous forme de segment de cercle, possède un guidage torique (30).

8. Plate-forme de référence selon l'une quelconque des revendicatins 1, 2, 3, 4, 5 et 6, caractérisée en ce qu'à partie de la fixation pour le bras de support (10), la plaque de raccordement (12) possède un bras de guidage (29) s'étendant chaque fois à gauche et à droite, dans la direction de la périphérie de la couronne du volant (17), sur lequel est disposé un galet de guidage (28), de forme convexe, qui est guidé dans la rainure de guidage (27) de la plate-forme de référence (9).

9. Plate-forme de référence selon l'une quelconque des revendications 1, 2, 3, 4, 5 et 7, caractérisée en ce qu'a partir de la fixation (39) pour le bras de support (10), la plaque de raccordement possède un bras de guidage (29) s'étendant chaque fois à gauche et à droite, dans la direction de la périphérie du volant, sur le quel un galet à gorge de roulement (32) est disposé, ou bien des galets sont disposés en disposition en V, qui sont en prise avec le guidage torique (30).

10. Plate-forme de référence selon l'une quelconque des revendications précédentes, caractérisée en ce que, sur son extrémité (34) opposée à la fixation (39), le bras de support (10) porte un guidage (35) pour une traverse transversale (36) et que la traverse transversale (36) possède des fixations (37, 38) mobiles, pour l'appareil de service, de contrôle ou de mesure (3) qui est à placer, respectivement à orienter dans le compartiment des passagers du véhicule automobile.

Fig. 1

EP 0 235 333 B1

Fig. 2

Fig. 2a

Fig. 2b

Fig. 3